Europäisches Patentamt

**European Patent Office**

**Office européen des brevets**

(19)

(11) Publication number: **0 081 936**
**A1**

# (12) EUROPEAN PATENT APPLICATION

(21) Application number: **82306332.6**

(22) Date of filing: **29.11.82**

(51) Int. Cl.³: **C 09 J 5/06,** C 08 G 18/42, D 06 M 17/00 // B29D29/04, C09J3/16

(30) Priority: **15.12.81 GB 8137801**

(43) Date of publication of application: **22.06.83**
**Bulletin 83/25**

(84) Designated Contracting States: **BE DE FR NL**

(71) Applicant: **DUNLOP LIMITED, Dunlop House Ryder Street St. James's, London SW1Y 6PX (GB)**

(72) Inventor: **Williams, Gareth Tegid, 2 Hazel Grove, Lichfield Staffs (GB)**
Inventor: **Reardon, Andrew Michael, 7 Comberton Road, Sheldon Birmingham (GB)**

(74) Representative: **Waller, Roy Ernest Sykes et al, Group Patent Department Dunlop Limited 2 Parade, Sutton Coldfield West Midlands B72 1PF (GB)**

(54) **Method of bonding polymer-impregnated textile.**

(57) A method of bonding polymer-impregnated textile, particularly belting, by assembling the portions to be bonded with an interlayer of a heat activatable, poly-urethane-forming reaction mixture which is fluid at 20 °C and comprises a prepolymer reaction product of a polyester polyol with a polyisocyanate and a curative for the prepolymer. The reaction mixture is then heat-activated to form a polyurethane, thereby bonding the portions of polymer-impregnated textile.

The polyurethane adhesive is fluid at 20 °C, has a reasonable pot-life i.e. is substantially stable or only slowly reactive at 20 °C but is heat-activatable to give a quick cure when required.

### METHOD OF BONDING POLYMER-IMPREGNATED
### TEXTILE

This invention relates to a method of bonding polymer-impregnated textile by assembling the portions of polymer-impregnated textile to be bonded with an interlayer of a polyurethane composition.

The invention is particularly directed to jointing belting in which case the portions of textile to be bonded will be of two belt ends, usually of complementary configuration. A method of jointing belting is known (U.K. Patent Specification No. 901,197) in which a castable polyurethane compound is poured into the gap between two belt ends and is subsequently cured by the action of heat. With the polyurethane compositions described for use in this method it is necessary to apply heat in order to render them liquid for application to the belt ends. Where belt ends are to be bonded "on site", e.g. down a mine it is a disadvantage if substantial heat is required to render the adhesive liquid.

The invention as claimed is intended to remedy the drawbacks of the prior art by providing a polyurethane adhesive composition which is fluid at $20^{\circ}$C., has a reasonable pot-life i.e. is substantially stable or only slowly reactive at room temperature ($20^{\circ}$C) but is heat-activatable to give a quick cure when required. Thus, the adhesive can be premixed and transported to where it is needed, e.g. down a mine, applied between the portions to be bonded, e.g. two belt ends, and then activated so as to bond the portions together quickly and simply.

According to the present invention a method of bonding polymer-impregnated textile by assembling the portions of polymer-impregnated textile to be bonded with an interlayer of a polyurethane composition characterised in that the polyurethane composition is a heat-activatable, polyurethane-forming reaction mixture fluid at $20^{\circ}$C and comprising

2. 0081936

a) a prepolymer reaction product of a polyester polyol with a polyisocyanate, and

b) a curative for said prepolymer, and then heat-activating said reaction mixture to form a polyurethane thereby bonding the portions of polymer-impregnated textile.

The room temperature ($20^{\circ}C$) stability of the polyurethane-forming reaction mixture may be achieved in one of several ways including

1) using known techniques to block isocyanate groups (e.g. with phenol or one of its derivatives such as paraphenyl phenol, caprolactam, the oximes of various aromatic and/or aliphatic ketones such as methyl ethyl ketoxime and the dialkyl malonates such as diethyl malonate), in the polyisocyanate so that they will be substantially inactive until unblocked by an increase in temperature, or

2) by using a heat-activatable (so-called thermolabile) curative. A suitable class of thermolabile curative is one where a diamine is rendered unreactive by being bound ionically into the crystalline matrix of an inorganic salt e.g. a complex of methylene-bis-aniline with sodium chloride which is available as a dispersion in diethyl phthalate known as Caytur 21 from Du Pont Limited.

"Textile" has its usual meaning in the art i.e. a woven or non-woven construction of natural or man-made fibres, filaments or yarns obtained by interlacing e.g. by weaving, knitting, felting, bonding or tufting. "Belting" is the name given to an elongate article for the transmission of power or for the purpose of conveying or elevating, hence generally known as transmission belting or conveyor belting.

It may be advantageous, particularly when bonding belt ends, to shape the textile portions to be bonded complementarily. The step of complementarily shaping the two ends of the textile may be carried into effect by providing interengaging formations on the ends, such formations providing a contact area for the jointing compound on each end of the belting at least twice as great and preferably several times greater than the minimum cross-sectional area of the belting at the ends to be joined. Preferably the formations comprise a complementary array of V-shaped notches that extends across the full width of each of the two ends of the belting, the notches being arranged so that when the two ends are brought together they are disposed in interengaging relation, and the present invention will be described hereinafter with particular reference to such V-shaped notches.

The length of each notch (in the longitudinal direction of the textile) should be considerably greater than the width to achieve optimum results. The length and width of the notches may be varied, but the ratio of notch length to notch width should conveniently be within the range 2:1 to 30:1 inclusive, and preferably 2:1 to 20:1. It will be understood that the term "V-shaped notches" as used herein is intended to include modifications to the notches as by rounding or squaring the peaks, provided that the joint faces or edges between the notches are of substantial length in relation to their width and extend in the general direction of the length of the textile. Improved jointing may be obtained by slight roughening of the V-shaped notches with a suitable instrument, before the complementary notched ends are fitted together.

When forming certain products such as belting, the "troughability" may require consideration. Troughability is the property whereby a belt when loosely supported in a horizontal plane will assume a trough-like configuration because of its innate weight and flexibility. For the purpose of comparison, troughability may be expressed as the number obtained by dividing the maximum depth of the trough by the maximum width of the belt in that region.  Preferably, the troughability of the jointed area is substantially that of the belt itself.

Preferably the portions to be bonded are in a substantially dry state, e.g. having a water content less than 5% by weight, more preferably less than 3% by weight, so that moisture cannot interfere with the bonding process.

Examples of suitable polyisocyanates include diphenylmethane-4,4'-diisocyanate (MDI) either in its pure form or modified to a liquid e.g. that available as Desmodur PF from Bayer U.K. Limited and tolylene diisocyanate (TDI) in the form of its mixed isomers (usually 80% of the 2,4 and 20% of the 2,6).

Non-flammability characteristics may be conferred on the polyurethane-forming reaction mixture by incorporating a flame-retardant material e.g. a dispersion of antimony trioxide in a chlorinated paraffin plasticiser such as is available as CP 56 from Hoechst U.K. Limited.

The polyurethane-forming reaction mixture is fluid at $20^{\circ}C$ for ease of handling and application, e.g. has a viscosity of not more than 50,000 centipoise. Where the polyester used is such that the resulting prepolymer is solid at $20^{\circ}C$. (e.g. in the case of a polycaprolactone polyol, which is preferably a polycaprolactone diol), fluidity may be achieved by incorporating an additional polymer in the prepolymer e.g. a polypropylene glycol (PPG).  The minimum amount of additional polymer necessary to confer fluidity on the resulting prepolymer may depend upon the required percentage isocyanate content of the final product.  For example, for a prepolymer based upon a 2000 molecular weight polycaprolactone diol (e.g. as is available under the trade name Capa 223 from  Interox Chemicals Limited) and a molar excess of a liquid, modified MDI, we have found that a minimum of 0.2 equivalents of a 2000 molecular weight polypropylene glycol diol per equivalent of the polycaprolactone diol is necessary to confer room temperature ($20^{\circ}$C) fluidity on a fully reacted prepolymer designed to have an isocyanate content of from 7 to 7.5%, whereas a minimum of 0.6 equivalent of the same polypropylene glycol diol per equivalent of the polycaprolactone diol is required to confer room temperature fluidity on a prepolymer designed to have an isocyanate content of 5%. The preferred molar ratio of polyester to polyisocyanate is from 1:1.5 to 1:5, advantageously about 1:2.2.

Another way of conferring fluidity is to blend into a prepolymer an inert, comparatively involatile liquid e.g. a paraffinic or phthalate-based organic material commonly used as plasticiser in polyvinyl chloride chemistry. For example, we have found that a minimum of 25 parts by weight of a chlorinated paraffinic plasticiser (available as CP 56 from Hoechst U.K. Limited) per 100 parts by weight of polycaprolactone diol (Capa 223) is required to confer fluidity on the resulting prepolymer where sufficient polyisocyanate (e.g. Desmodur PF) is used to yield a fully reacted prepolymer having an isocyanate content of 6.6%. The preferred ratio of curative to prepolymer is such that the stoichiometric ratio of curative to NCO is from 0.75:1 to 1.3:1, advantageously about 1:1.

Some adipate-based polymers are fluid at room temperature ($20^{\circ}$C) and thus yield prepolymers which are fluid at room temperature without the need for a fluidising ingredient. Available adipate-based polymers are usually copolymers of adipic acid with a low molecular weight diol such as ethane diol or butane diol, i.e. they are formed by the condensation polymerisation of diesters of adipic acid. The invention is illustrated by the following Examples.

## EXAMPLE I

A polyurethane prepolymer was made by thoroughly mixing the following ingredients together under nitrogen:

| | |
|---|---|
| Polycaprolactone diol (2000 molecular weight, available as Capa 223 from Interox) | 100 g |
| Polypropylene glycol diol (2000 molecular weight, available as Propylan D-2002 from Lankro Chemicals, now trading as Diamond Shamrock Chemicals Limited) | 100 g |
| Diphenyl methane 4,4'-di-isocyanate modified to liquid form (equivalent weight of 184.5 available as Desmodur PF from Bayer) | 221.4 g |

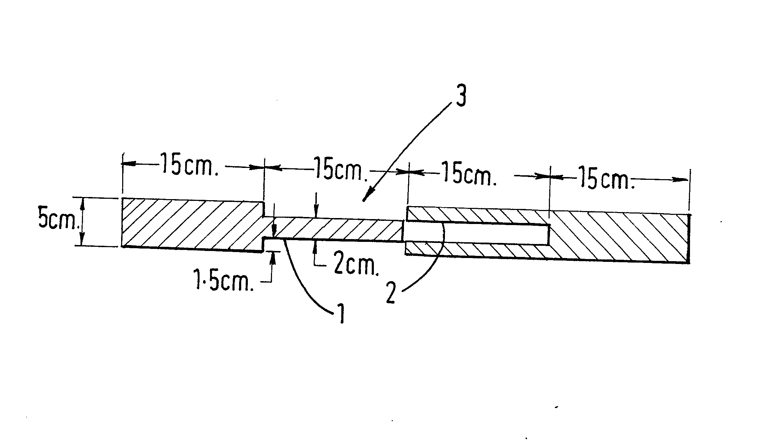

The mixture was left to stand for 16 hours at room temperature after which the components had completely reacted to a homogeneous fluid prepolymer having an isocyanate content of 7.25% by weight. 34 g of a thermolabile complex of methylene-bis-aniline with sodium chloride (available as Caytur 21 from Du Pont) were added as curative and thoroughly mixed into 100 g of the prepolymer. The resulting composition was applied to the joint faces 1,2 of a test piece 3 shown in the Figure and the joint was then assembled by interlocking the complementary formations. The total length of the joint interface was (2 x 1.5) + (2 x 15) + 2 cm = 35 cm. The assembly was heated to 120°C under a pressure of 25 psi (17 bar) for 1 hour. After a further 3 days at room temperature the sample was tested in a tensile tester and the breaking face was found to be 0.9 tons, equivalent to 30N/mm of joint face (overall breaking force divided by length in mm in the joint face).

By comparison, the same joint adhered with a polyvinyl chloride composition in place of the polyurethane had a breaking force of 0.64 tons, equivalent to 23 N/mm of joint face.

### EXAMPLE II

A polyurethane prepolymer was made by thoroughly mixing the following ingredients under nitrogen:

| | |
|---|---|
| Polycaprolactone diol (2000 molecular weight, available as Capa 225 from Interox) | 200 g |
| Propylan D-2002 | 50 g |
| Desmodur PF | 153 g |

The mixture was left to stand for 16 hours at room temperature, after which the components had reacted to a homogeneous fluid prepolymer having an isocyanate content of 6.07% by weight. To 100 g of this prepolymer were added the following ingredients:

| | |
|---|---|
| Caytur 21 (as thermolabile curative) | 28.5 g |
| 1:2 by weight dispersion of antimony trioxide in a chlorinated paraffin plasticiser containing 56 parts by weight of chlorine (available as Chloroparaffin 56 from Hoechst) | 30 g |
| Antistatic agent (available as Catafor CA 100 from ABM Chemicals) | 2 g |

The mixture was used as a jointing adhesive as described in Example I. The breaking force was 0.84 tons equivalent to 28 N/mm of joint face and the joint was found to pass the National Coal Board test No. 158 of flammability and self-extinguishing properties.

### EXAMPLE III

A polyurethane prepolymer was made by thoroughly mixing the following ingredients at 60°C under nitrogen:

| | |
|---|---|
| Adipate-based diol (2000 molecular weight, available as Diorez 520 from Briggs and Townsend) | 200 g |
| Diphenylmethane 4,4'-diisocyanate (available as Desmodur 44 from Bayer) | 75 g |

The mixture was allowed to cool to room temperature and after 16 hours a fluid prepolymer having an isocyanate content of 6.11% was obtained. 29 g of Caytur 21 were added to 100 g of the prepolymer and the resulting mixture was applied to the joint surface of the test piece. The joint was assembled as shown in the Figure and cured by heating to 120$^{\circ}$C at a pressure of 25 psi (17 bar) for 1 hour. After a further 3 days at room temperature, the sample was tested in a tensile tester and the breaking force was found to be 0.87 tons, equivalent to 29 N/mm of joint face.

## EXAMPLE IV

A plasticised polyurethane prepolymer was made by reacting the following ingredients together at 70$^{\circ}$C for 4 hours.

| | |
|---|---|
| Adipate-based diol (2000 molecular weight, available as Diorez 520 from Briggs and Townsend) | 1000 g |
| Diphenylmethane 4,4'-diisocyanate (available as Desmodur 44 from Bayer) | 312.5 g |
| Chlorinated paraffin plasticiser | 525 g |

A mixture of Caytur 21 (329 g) and antimony dioxide (175 g) was then stirred into the prepolymer and the resulting composition was then applied to the joint faces of the test piece. The joint was assembled and cured by heating to 120$^{\circ}$C at a pressure of 25 psi (17 bar) for 1 hour. The breaking force was found to be 0.8 ton, equivalent to 26.6 N/mm of joint face.

## EXAMPLE V

A polyurethane prepolymer was made by mixing Diorez with TDI under nitrogen at room temperature and then heating in an oven at 75$^{\circ}$C for 4 hours.

| | |
|---|---|
| Adipate –based diol (2000 molecular weight, available as Diorez 520 from Briggs and Townsend) | 150 g |
| Tolylene diisocyanate (TDI) (an 80% 2,4, 20% 2,6 mixture of isomers) | 19 g |

After degassing, the resulting prepolymer was found to have a 3.81% isocyanate content.

20.7 g Caytur 21, in which had been dispersed 5.3 g dry, finely powdered antimony oxide and 16.1 g decabromophenylene oxide, were then added to the prepolymer. The mixture was then used as in previous Examples to make a spliced joint. The breaking force was found to be 0.87 ton, equivalent to 29 N/mm of joint face.

CLAIMS:

1.      A method of bonding polymer-impregnated textile comprises assembling the portions of polymer-impregnated textile to be bonded with an interlayer of a polyurethane composition characterised in that the polyurethane composition is a heat-activatable,

polyurethane-forming reaction mixture fluid at $20^{\circ}$C and comprising

a)      a prepolymer reaction product of a polyester polyol with a polyisocyanate, and

b)      a curative for said prepolymer,
        and then heat-activating said reaction mixture
        to form a polyurethane, thereby bonding the
        portions of polymer-impregnated textile.

2.      A method according to claim 1 characterised in that the polyester polyol comprises a polycaprolactone polyol.

3.      A method according to claim 1 or 2 characterised in that the prepolymer includes a material to achieve fluidity.

4.      A method according to claim 1 characterised in that the polyester polyol is fluid at $20^{\circ}$C.

5.      A method according to any preceding claim characterised in that the prepolymer includes a polyester polyol and a polypropylene glycol.

6.      A method according to any preceding claim characterised in that the prepolymer includes a plasticiser.

7.      A method according to any preceding claim characterised in that the polyester polyol comprises an adipate-based polymer.

8.      A method according to any preceding claim characterised in that the curative is heat-activatable.

9.      A method according to any preceding claim characterised in that the polyisocyanate is selected from diphenylmethane-4,4'-diisocyanate and tolylene diisocyanate.

10.      A method according to any preceding claim characterised in that the textile is impregnated with polyvinyl chloride.

11.    A method according to any preceding claim characterised in that the stoichiometric ratio of curative to NCO is from 0.75:1 to 1.3:1 and the molar ratio of polyester to polyisocyanate is from 1:1.5 to 1:5.

EAF/JMT - TE.10175

European Patent
Office

**EUROPEAN SEARCH REPORT**

Application number

| | DOCUMENTS CONSIDERED TO BE RELEVANT | | EP 82306332.6 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| A | DE - B2 - 2 709 553 (BBA GROUP)<br><br>* Column 4, line 33 - column 6, line 8; column 6, lines 55-66; claims 1,2 *<br><br>-- | 1,8,9 | C 09 J 5/06<br>C 08 G 18/42<br>D 06 M 17/00//<br>B 29 B 29/04<br>C 09 J 3/16 |
| A | GB - A - 1 523 237 (IMPERIAL CHEMICAL INDUSTRIES)<br><br>* Claims 1,4,8 *<br><br>-- | 1,7,9 | |
| A | US - A - 3 891 606 (IRVING CH. KOGON)<br><br>* Abstract; claims 1,3,5,7,12, 13 *<br><br>-- | 1 | |
| A | US - A - 4 125 522 (JUDITH W. BECKER)<br><br>* Claims 1,6,9 *<br><br>---- | 1 | **TECHNICAL FIELDS SEARCHED (Int. Cl. ³)**<br><br>C 09 J 5/00<br>C 09 J 3/00<br>D 06 M<br>D 06 N<br>C 08 J<br>C 08 G 18/00<br>B 32 B 27/00<br>B 29 D<br>B 32 B 29/00 |

The present search report has been drawn up for all claims

| Place of search | Date of completion of the search | Examiner |
|---|---|---|
| VIENNA | 02-03-1983 | KAHOVEC |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82